# EUROPEAN PATENT APPLICATION

(11) **EP 3 842 656 A1**
(43) Date of publication of application: **30.06.2021**
(21) Application number: 19913873.6
(22) Date of filing: 25.12.2019
(51) Int. Cl.: F16D 65/853, F16D 55/40

(54) **WORK MACHINE**

(30) Priority: 31.01.2019 JP 2019015914
(71) Applicant: Komatsu Ltd., Minato-ku Tokyo 107-8414 (JP)
(72) Inventor: NAITO, Shinichi, Tokyo 107-8414 (JP); ODA, Kenji, Tokyo 107-8414 (JP); MIURA, Yusuke, Tokyo 107-8414 (JP)
(74) Representative: Grünecker Patent- und Rechtsanwälte PartG mbB
(86) International application number: PCT/JP2019/050852
(87) International publication number: WO 2020/158271

(57) **Abstract**

Lubricating performance of a parking brake is ensured and fuel efficiency during traveling is improved. A parking brake (110) for braking rotation of an output shaft (80) is disposed around the output shaft (80) rotated by driving force. The output shaft (80) is provided with an axial oil passage (91), a first discharge hole (94), and a second discharge hole (96). The axial oil passage (91) extends in an axial direction of the output shaft (80). The first discharge hole (94) and the second discharge hole (96) communicate with the axial oil passage (91) and open in an outer circumferential surface of the output shaft (80) at an installation position of the parking brake (110) in the axial direction.

## Description

### TECHNICAL FIELD

The present disclosure relates to a work machine.

### BACKGROUND ART

US Patent No. 4024936 (PTL 1) discloses a parking brake of a vehicle. In the configuration disclosed in this document, a plurality of brake discs are alternately arranged around an output shaft of a transmission. The output shaft is provided with an axial hole and a radial hole.

### CITATION LIST

### PATENT LITERATURE

PTL 1: US Patent No. 4024936

### SUMMARY OF INVENTION

### TECHNICAL PROBLEM

The above-mentioned document discloses that pressurized fluid introduced into the axial hole flows in the vicinity of the brake discs for cooling and lubrication.

The radial hole disclosed in the above-mentioned document opens at a position distant from the brake discs in the axial direction of the output shaft. This prevents the pressurized fluid flowing out through the radial hole from being directly supplied to the brake discs. It is considered that the plurality of brake discs are entirely cooled and lubricated by immersing each of the brake discs in the pressurized fluid accumulated in a space located below the output shaft and housing the brake discs. In this case, the brake discs that rotate integrally with the output shaft during traveling of the vehicle receives the stirring resistance of the fluid, which leads to deterioration in fuel efficiency.

The present disclosure provides a work machine, in which the lubricating performance of a parking brake can be ensured and the fuel efficiency during traveling can be improved.

### SOLUTION TO PROBLEM

According to the present disclosure, a work machine is provided that includes: a machine body; a driving wheel attached to the machine body; a driving source device that generates driving force for driving the driving wheel; and a power transmission device that transmits the driving force from the driving source device to the driving wheel. The power transmission device includes a shaft that is rotated by the driving force. The work machine further includes a parking brake disposed around the shaft to brake rotation of the shaft. The shaft is provided with an axial oil passage and a discharge hole. The axial oil passage extends in an axial direction of the shaft. The discharge hole communicates with the axial oil passage and opens in an outer circumferential surface of the shaft at an installation position of the parking brake in the axial direction.

### ADVANTAGEOUS EFFECTS OF INVENTION

According to the work machine of the present disclosure, the lubricating performance of the parking brake can be ensured and the fuel efficiency during traveling can be improved.

### BRIEF DESCRIPTION OF DRAWINGS

Fig. 1 is a side view schematically showing a configuration of a wheel loader according to an embodiment.
Fig. 2 is a schematic diagram showing a power transmission device for traveling of the wheel loader according to the embodiment.
Fig. 3 is a cross-sectional view showing a configuration in the vicinity of an output shaft of a transfer case.
Fig. 4 is a partial cross-sectional view of an output shaft.
Fig. 5 is a cross-sectional view of the output shaft, which is taken along a line V-V shown in Fig. 4.
Fig. 6 is a cross-sectional view of the output shaft, which is taken along a line VI-VI shown in Fig. 4.
Fig. 7 is a diagram showing radial cross sections of the output shaft and a cylindrical member.
Fig. 8 is a cross-sectional view of the cylindrical member, which is taken along a line VIII-VIII shown in Fig. 7.
Fig. 9 is a cross-sectional view of the cylindrical member, which is taken along a line IX-IX shown in Fig. 7.
Fig. 10 is a cross-sectional view of the cylindrical member, which is taken along a line X-X shown in Fig. 7.
Fig. 11 is a cross-sectional view of the cylindrical member, which is taken along a line XI-XI shown in Fig. 7.
Fig. 12 is a cross-sectional view of the cylindrical member, which is taken along a line XII-XII shown in Fig. 7.
Fig. 13 is a cross-sectional view of the cylindrical member, which is taken along a line XIII-XIII shown in Fig. 7.

### DESCRIPTION OF EMBODIMENTS

In the following, embodiments will be described with reference to the accompanying drawings. In the following description, the same components are denoted by the same reference characters. The same components also have the same names and the same functions. Therefore, the detailed description thereof will not be repeated.

### [Overall Configuration]

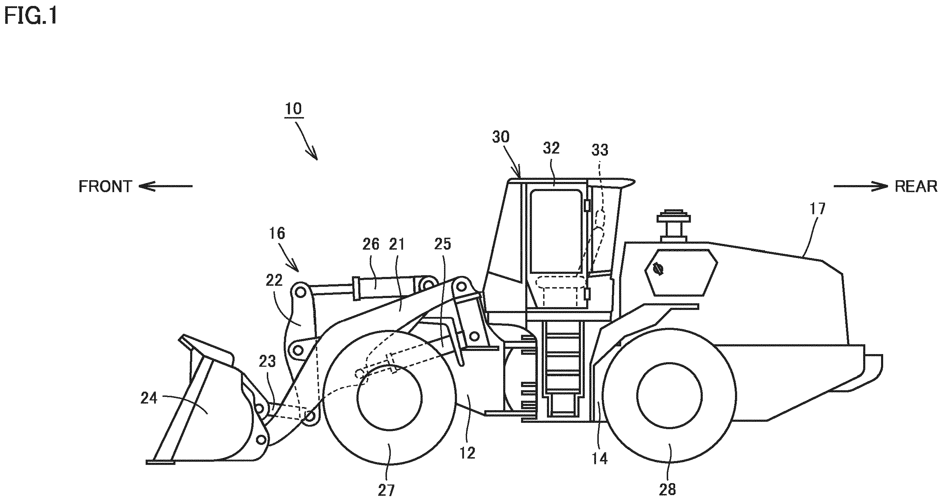

In embodiments, a wheel loader 10 will be described as an example of a work machine to which the concept of the present disclosure is applicable. Fig. 1 is a side view schematically showing a configuration of wheel loader 10 according to an embodiment.

As shown in Fig. 1, wheel loader 10 includes a front frame 12, a rear frame 14, a front wheel 27, a rear wheel 28, a work implement 16, a cab (an operator's cab) 30, an operator's seat 33, and an engine hood 17.

In the following description, the direction in which wheel loader 10 travels straight forward will be referred to as a front-rear direction of wheel loader 10. In the front-rear direction of wheel loader 10, the side on which work implement 16 is located with respect to front frame 12 and rear frame 14 is defined as a frontward direction, and the side opposite to the frontward direction is defined as a rearward direction. The right-left direction of wheel loader 10 is orthogonal to the front-rear direction in a plan view. In a view facing forward, the right side and the left side in the right-left direction are defined as a right direction and a left direction, respectively. The top-bottom direction of wheel loader 10 is orthogonal to a plane defined by the front-rear direction and the right-left direction. In the top-bottom direction, the ground side is defined as a lower side and the sky side is defined as an upper side.

The front-rear direction corresponds to the front-rear direction with respect to an operator sitting on operator's seat 33 inside cab 30. The right-left direction corresponds to the right-left direction with respect to an operator sitting on operator's seat 33. The right-left direction corresponds to a vehicular width direction of wheel loader 10. The top-bottom direction corresponds to the top-bottom direction with respect to an operator sitting on operator's seat 33. The direction in which an operator sitting on operator's seat 33 faces corresponds to the frontward direction, and the backward direction with respect to an operator sitting on operator's seat 33 corresponds to the rearward direction. The right side and the left side with respect to an operator sitting on operator's seat 33 and facing frontward correspond to the rightward direction and the leftward direction, respectively. The foot side and the head side of an operator sitting on operator's seat 33 correspond to the lower side and the upper side, respectively.

Front frame 12 and rear frame 14 constitute a vehicular body frame having an articulated structure. The vehicular body frame corresponds to a machine body of the embodiment. Front frame 12 is provided forward of rear frame 14. Front frame 12 is rotatably connected to rear frame 14 by a center pin (not shown). The center of rotation of front frame 12 with respect to rear frame 14 corresponds to an axis extending in the top-bottom direction.

Front frame 12 and rear frame 14 are coupled by a steering cylinder (not shown). A pair of steering cylinders are provided on the right and left sides. As the steering cylinders are driven to extend and contract, front frame 12 rotates in the right-left direction about the above-mentioned center pin.

Front wheel 27 and rear wheel 28 are traveling wheels of wheel loader 10. Front wheel 27 is provided in front frame 12. A pair of front wheels 27 are provided on the right and left sides. Rear wheel 28 is provided in rear frame 14. A pair of rear wheels 28 are provided on the right and left sides.

Work implement 16 is provided in front frame 12. Work implement 16 is placed forward of front frame 12. Work implement 16 includes a boom 21, a bucket 24, a boom cylinder 25, a bell crank 22, a bucket cylinder 26, and a link 23.

Cab 30 and engine hood 17 are provided in rear frame 14. Cab 30 is provided rearward of work implement 16. Engine hood 17 is provided rearward of cab 30. A hydraulic oil tank, an engine, a hydraulic pump, an air cleaner, and the like are accommodated in engine hood 17.

Cab 30 defines an interior space in which an operator is seated. A door 32 is provided on the side surface of cab 30. Door 32 is opened and closed when the operator gets into and out of cab 30. Operator's seat 33 is provided in the interior space defined inside cab 30. In cab 30, the operator sits in operator's seat 33 and operates traveling of wheel loader 10 and operates work implement 16.

### [Configuration of Power Transmission Device]

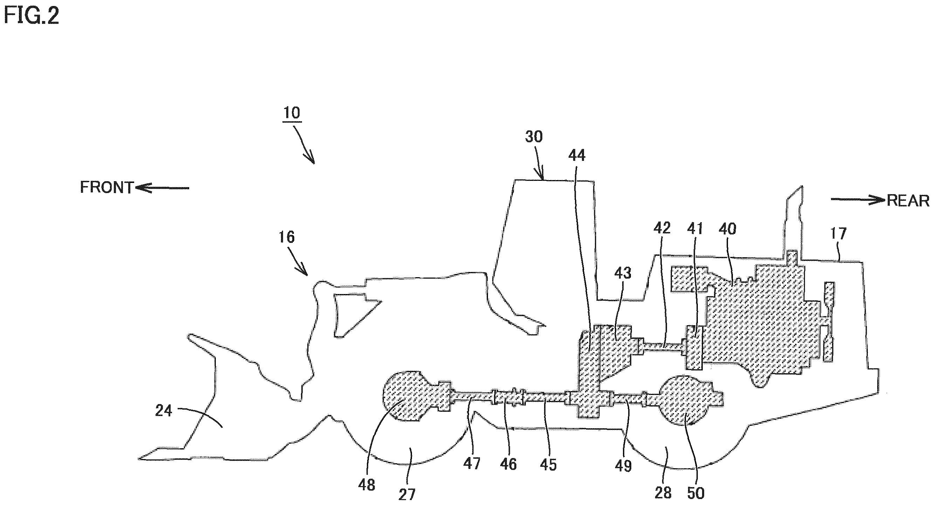

Fig. 2 is a schematic diagram showing a power transmission device for traveling of wheel loader 10 according to the embodiment. As described above, engine 40 is accommodated in engine hood 17. In wheel loader 10 according to the embodiment, both front wheel 27 attached to front frame 12 and rear wheel 28 attached to rear frame 14 constitute driving wheels that receive driving force for traveling of wheel loader 10. Engine 40 corresponds to a driving source device of the embodiment that generates driving force for driving the driving wheels (front wheel 27 and rear wheel 28). The power transmission device shown in Fig. 2 is configured to transmit the driving force from engine 40 to front wheel 27 and rear wheel 28.

The driving force generated by engine 40 is transmitted to a torque converter 41. The driving force output from torque converter 41 is transmitted to a transmission 43 through an upper propeller shaft 42. Transmission 43 shifts the driving force to achieve an appropriate torque and rotation speed. A transfer case 44 is connected to transmission 43. Transfer case 44 is configured to distribute the driving force to the front and rear axles.

A center propeller shaft 45 is connected to an output shaft of transfer case 44. Center propeller shaft 45 is connected to a front propeller shaft 47 through a center support 46. A front axle 48 is connected to a front end of front propeller shaft 47. The driving force distributed by transfer case 44 is transmitted through center propeller shaft 45 and front propeller shaft 47 to front axle 48. The driving force is transmitted from front axle 48 to a pair of right and left front wheels 27.

A rear propeller shaft 49 is connected to the output shaft of transfer case 44. A rear axle 50 is connected to a rear end of rear propeller shaft 49. The driving force distributed by transfer case 44 is transmitted to rear axle 50 through rear propeller shaft 49. The driving force is transmitted from rear axle 50 to a pair of right and left rear wheels 28.

The power transmission device is not limited to the above-mentioned configuration including torque converter 41 and transmission 43. The power transmission device may be configured to include a hydrostatic transmission (HST) or a hydraulic-mechanical transmission (HMT) that includes a hydraulic pump and a hydraulic motor for converting the driving force generated by engine 40 into hydraulic pressure and transmitting the generated hydraulic pressure. Alternatively, the power transmission device may be configured to include an electro-mechanical transmission (EMT) including a power generator and an electric motor in place of the hydraulic pump and the hydraulic motor. The driving source device that generates driving force for rotating an output shaft 80 may be a hydraulic motor, an electric motor, or the like.

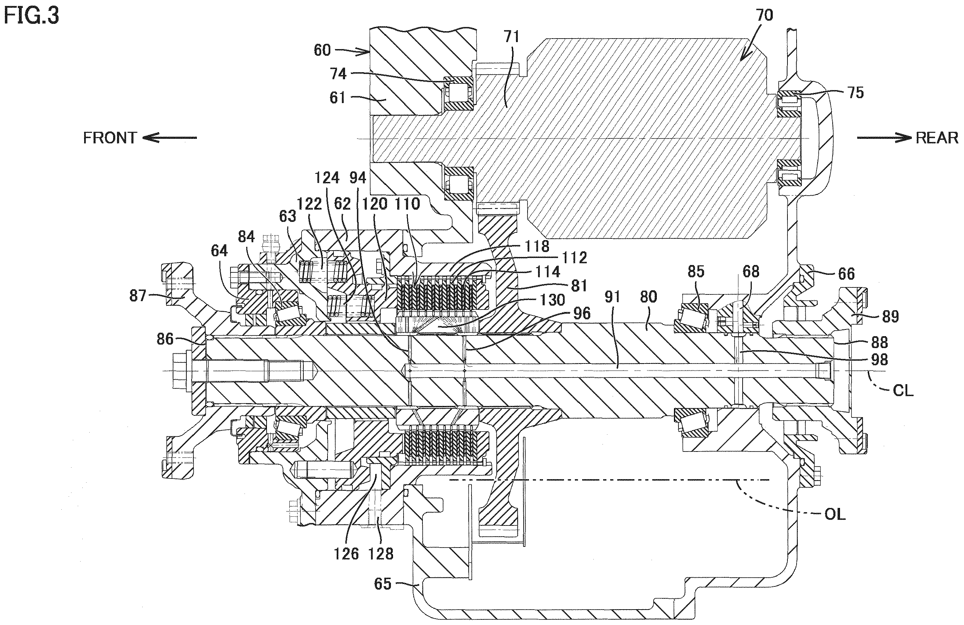

Fig. 3 is a cross-sectional view showing a configuration in the vicinity of output shaft 80 of transfer case 44. Transfer case 44 includes a transfer housing 60 forming the outer shape of transfer case 44. Transfer housing 60 includes a first housing member 61, a second housing member 62, a third housing member 63, a fourth housing member 64, a fifth housing member 65, and a sixth housing member 66.

Fifth housing member 65 has an oil pan formed therein. An oil level OL indicated by a two-dot chain line in Fig. 3 indicates the liquid level of the lubricating oil stored in the oil pan when wheel loader 10 travels.

Transfer case 44 includes an intermediate gear mechanism 70. Intermediate gear mechanism 70 is rotatably supported on transfer housing 60 by bearings 74 and 75. Intermediate gear mechanism 70 has a gear portion 71. Gear portion 71 has an outer circumferential surface on which gear teeth are formed.

Transfer case 44 has output shaft 80. Output shaft 80 is accommodated in transfer housing 60. Output shaft 80 is rotatably supported on transfer housing 60 by bearings 84 and 85. A center line CL indicated by a one-dot chain line in Fig. 3 indicates the center of rotation of output shaft 80. Output shaft 80 has an outer circumferential surface onto which an output gear 81 is spline-fitted. Output gear 81 is rotatable integrally with output shaft 80. Output gear 81 engages with gear teeth of gear portion 71.

Output shaft 80 has a front end 86 and a rear end 88. Front end 86 of output shaft 80 has an outer circumferential surface to which a frontward output flange 87 is attached by spline fitting. Rear end 88 of output shaft 80 has an outer circumferential surface to which a rearward output flange 89 is attached by spline fitting. Frontward output flange 87 is connected to center propeller shaft 45 shown in Fig. 2. Rearward output flange 89 is connected to rear propeller shaft 49 shown in Fig. 2.

The driving force transmitted from transmission 43 to transfer case 44 is transmitted from intermediate gear mechanism 70 through output gear 81 to output shaft 80. The driving force is output to center propeller shaft 45 from frontward output flange 87 attached to front end 86 of output shaft 80. The driving force is transmitted to rear propeller shaft 49 from rearward output flange 89 attached to rear end 88 of output shaft 80. Frontward output flange 87 forms a frontward output member of the embodiment that outputs the driving force to be transmitted to front wheel 27. Rearward output flange 89 forms a rearward output member of the embodiment that outputs the driving force to be transmitted to rear wheel 28.

Further, a cylindrical member 130 is attached by spline fitting to the outer circumferential surface of output shaft 80. Cylindrical member 130 is provided to be rotatable integrally with output shaft 80.

### [Configuration of Parking Brake 110]

A parking brake 110 is disposed around cylindrical member 130. Parking brake 110 is disposed around output shaft 80 to brake output shaft 80. Parking brake 110 includes a plurality of plates 112 and a plurality of discs 114.

The plurality of plates 112 are attached to transfer housing 60, more particularly, to second housing member 62. Second housing member 62 has an extending portion 118 extending rearward (to the right in Fig. 3) in the interior space of transfer housing 60. The plurality of plates 112 are attached to extending portion 118 so as to be movable in the axial direction of output shaft 80. The plurality of plates 112 are provided not to be rotatable. The plurality of plates 112 are spaced apart from each other in the axial direction in parallel with each other. In Fig. 3, only one of the plurality of plates 112 is denoted by a reference character while remaining plates 112 are not denoted by reference characters.

The plurality of discs 114 are attached to output shaft 80 with cylindrical member 130 interposed therebetween. The plurality of discs 114 are attached to cylindrical member 130 so as to be movable in the axial direction of output shaft 80. The plurality of discs 114 are disposed to be rotatable integrally with output shaft 80. The plurality of discs 114 are spaced apart from each other in the axial direction of output shaft 80 (in the right-left direction in Fig. 3) in parallel with each other. In Fig. 3, only one of the plurality of discs 114 is denoted by a reference character while remaining discs 114 are not denoted by reference characters.

The plurality of plates 112 and the plurality of discs 114 are alternately arranged in the axial direction. The plurality of plates 112 and the plurality of discs 114 form a frictional engagement portion of the embodiment.

Parking brake 110 includes a piston member 120. Piston member 120 is provided to be movable in the axial direction. A first spring portion 122 and a second spring portion 124 each have a front end coming into contact with third housing member 63 and a rear end coming into contact with piston member 120. First spring portion 122 and second spring portion 124 urge piston member 120 rearward.

An oil chamber 126 surrounded by piston member 120 and second housing member 62 is provided. Oil chamber 126 communicates with a piston driving oil passage 128 formed in second housing member 62. The piston driving oil that applies hydraulic pressure onto piston member 120 flows through piston driving oil passage 128 into or out of oil chamber 126. The pressure of the piston driving oil in oil chamber 126 acts forward (leftward in Fig. 3) with respect to piston member 120.

As the piston driving oil flows out of oil chamber 126 to thereby lower the hydraulic pressure inside oil chamber 126, piston member 120 moves rearward by the urging force from first spring portion 122 and second spring portion 124. Piston member 120 comes into contact with plates 112 to cause frictional engagement between plates 112 and the respective discs 114. Thereby, parking brake 110 generates braking force to brake the rotation of output shaft 80.

Also, the piston driving oil is supplied to oil chamber 126 to increase the hydraulic pressure inside oil chamber 126 to thereby increase the hydraulic pressure inside oil chamber 126 to be greater than the urging force from first spring portion 122 and second spring portion 124, with the result that piston member 120 moves forward. As piston member 120 is separated from plates 112 to thereby release the frictional engagement between plates 112 and the respective discs 114, the braking force from parking brake 110 is cancelled to thereby allow rotation of output shaft 80.

In Fig. 3, piston member 120 shown above center line CL in the figure moves forward to be located at a position away from each plate 112. Thus, the frictional engagement between plates 112 and the respective discs 114 is released. On the other hand, piston member 120 shown below center line CL in the figure moves rearward to come into contact with plates 112, which causes frictional engagement between plates 112 and the respective discs 114.

### [Configuration of Oil Passage]

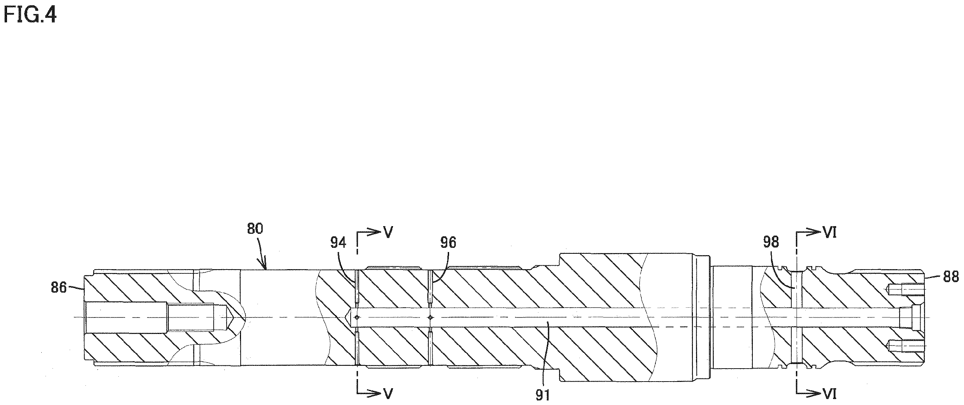

Fig. 4 is a partial cross-sectional view of output shaft 80. As shown in Figs. 3 and 4, output shaft 80 is provided with an axial oil passage 91, a first discharge hole 94, a second discharge hole 96, and a supply oil passage 98. Axial oil passage 91 extends in the axial direction of output shaft 80. Axial oil passage 91 is formed along center line CL of output shaft 80. First discharge hole 94, second discharge hole 96, and supply oil passage 98 each extend from axial oil passage 91 in the radial direction of output shaft 80, and each open in the outer circumferential surface of output shaft 80. First discharge hole 94, second discharge hole 96, and supply oil passage 98 allow communication between axial oil passage 91 and the outer circumferential surface of output shaft 80.

First discharge hole 94 and second discharge hole 96 open in the outer circumferential surface of output shaft 80 at an installation position of parking brake 110 in the axial direction of output shaft 80. First discharge hole 94 and second discharge hole 96 open in the outer circumferential surface of output shaft 80 at an installation position of the frictional engagement portion formed by plates 112 and discs 114 in the axial direction. First discharge hole 94 and second discharge hole 96 open in the outer circumferential surface of output shaft 80 between the front end position and the rear end position of discs 114. First discharge hole 94 and second discharge hole 96 shown in Fig. 3 are entirely disposed between the front end position and the rear end position of discs 114. Supply oil passage 98 is disposed rearward of first discharge hole 94 and second discharge hole 96.

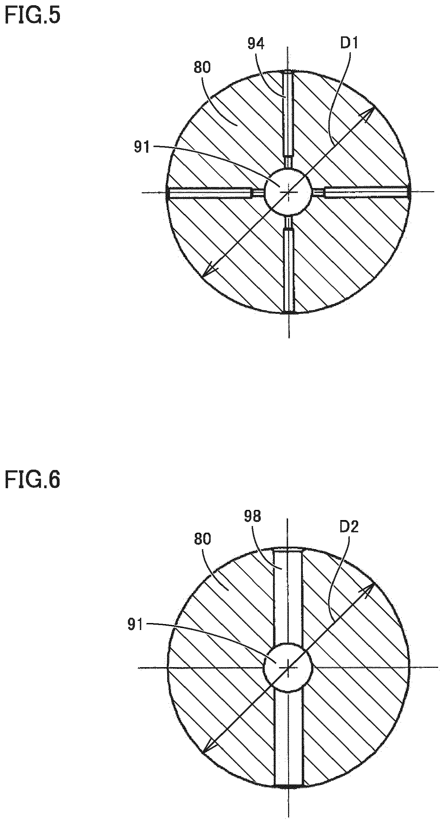

Fig. 5 is a cross-sectional view of output shaft 80, which is taken along a line V-V shown in Fig. 4. Fig. 5 shows a radial cross section of output shaft 80 at a position where first discharge hole 94 is formed in output shaft 80. As shown in Fig. 5, first discharge hole 94 is radially formed. Output shaft 80 is provided with four first discharge holes 94 that are arranged at intervals of 90° about center line CL. As shown in Fig. 5, output shaft 80 has an outer diameter D1 at the position where each first discharge hole 94 is formed.

Although not shown, second discharge hole 96 is also radially formed like first discharge hole 94. Second discharge holes 96 are formed at the same positions as those of the corresponding first discharge holes 94 in the circumferential direction of output shaft 80.

Fig. 6 is a cross-sectional view of output shaft 80, which is taken along a line VI-VI shown in Fig. 4. Fig. 6 shows a radial cross section of output shaft 80 at a position where supply oil passage 98 is formed in output shaft 80. As shown in Fig. 6, output shaft 80 is provided with two supply oil passages 98. Supply oil passages 98 are arranged at intervals of 180° about center line CL. As shown in Fig. 6, output shaft 80 has an outer diameter D2 at a position where each supply oil passage 98 is formed.

Outer diameter D2 of output shaft 80 shown in Fig. 6 is smaller than outer diameter D1 of output shaft 80 shown in Fig. 5. Output shaft 80 has a non-uniform outer diameter such that outer diameter D2 at the position where supply oil passage 98 is formed is smaller than outer diameter D1 at the position where first discharge hole 94 is formed.

As shown in Fig. 3, a housing oil passage 68 is formed in transfer housing 60, more specifically, in first housing member 61. Housing oil passage 68 is formed at a position where supply oil passage 98 is formed in output shaft 80 in the axial direction. Supply oil passage 98 opens in the outer circumferential surface of output shaft 80. This opening of supply oil passage 98 can face housing oil passage 68. Two supply oil passages 98 are formed in output shaft 80 at respective two positions in the circumferential direction. As output shaft 80 rotates, the openings of these two supply oil passages 98 alternately move to such a position as to face housing oil passage 68.

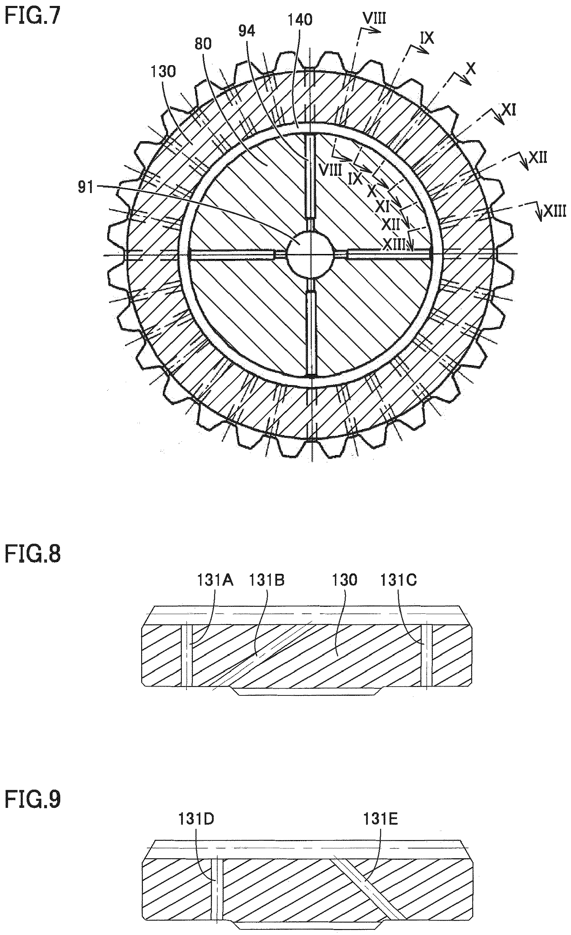

Fig. 7 is a diagram showing radial cross sections of output shaft 80 and cylindrical member 130. Fig. 7 shows a radial cross section of output shaft 80 at a position where first discharge hole 94 is formed in output shaft 80, as in Fig. 5, and a cross section of cylindrical member 130 along the same cross section. Cylindrical member 130 is attached at an interface with the outer circumferential surface of output shaft 80 at the position where first discharge hole 94 and second discharge hole 96 open in the outer circumferential surface of output shaft 80. The outer circumferential surface of output shaft 80 is not in contact with the inner circumferential surface of cylindrical member 130, to thereby provide a gap between the outer circumferential surface of output shaft 80 and the inner circumferential surface of cylindrical member 130.

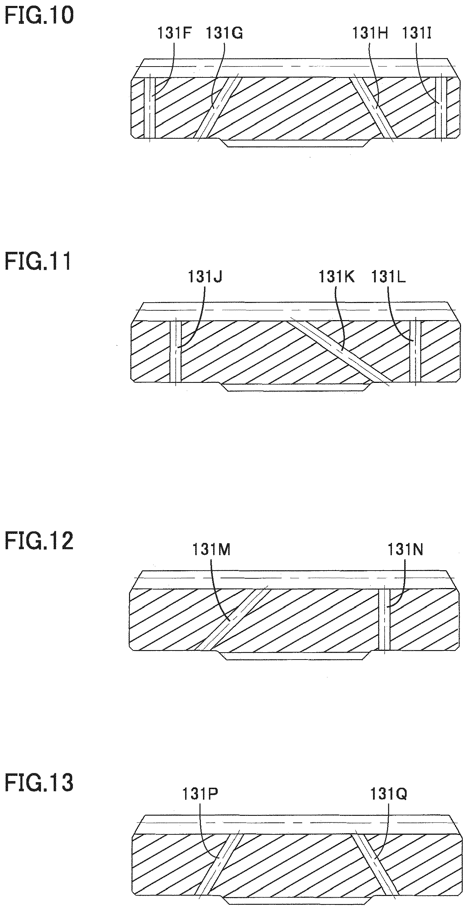

Fig. 8 is a cross-sectional view of cylindrical member 130, which is taken along a line VIII-VIII shown in Fig. 7. Fig. 9 is a cross-sectional view of cylindrical member 130, which is taken along a line IX-IX shown in Fig. 7. Fig. 10 is a cross-sectional view of cylindrical member 130, which is taken along a line X-X shown in Fig. 7. Fig. 11 is a cross-sectional view of cylindrical member 130, which is taken along a line XI-XI shown in Fig. 7. Fig. 12 is a cross-sectional view of cylindrical member 130, which is taken along a line XII-XII shown in Fig. 7. Fig. 13 is a cross-sectional view of cylindrical member 130, which is taken along a line XIII-XIII shown in Fig. 7.

As shown in Figs. 7 to 13, cylindrical member 130 is provided with a plurality of oil passage through holes passing through cylindrical member 130 in the radial direction. Each of the oil passage through holes opens in both the inner circumferential surface and the outer circumferential surface of cylindrical member 130. The plurality of oil passage through holes are formed at different positions of output shaft 80 in the axial direction and the circumferential direction. Figs. 8 to 13 each show a cross section of cylindrical member 130 at different positions in the circumferential direction and oil passage through holes formed in each cross section.

More specifically, in the cross section shown in Fig. 8, three oil passage through holes 131A, 131B, and 131C are formed at different positions in the axial direction. Oil passage through holes 131A and 131C each extend in the radial direction. Oil passage through hole 131B is inclined with respect to the axial direction and the radial direction. In the cross section shown in Fig. 9, two oil passage through holes 131D and 131E are formed at different positions in the axial direction. Oil passage through hole 131D extends in the radial direction. Oil passage through hole 131E is inclined with respect to the axial direction and the radial direction.

In the cross section shown in Fig. 10, four oil passage through holes 131F, 131G, 131H, and 1311 are formed at different positions in the axial direction. Oil passage through holes 131F and 1311 extend in the radial direction. Oil passage through holes 131G and 131H are inclined with respect to the axial direction and the radial direction. In the cross section shown in Fig. 11, three oil passage through holes 131J, 131K, and 131L are formed at different positions in the axial direction. Oil passage through holes 131J and 131L extend in the radial direction. Oil passage through hole 131K is inclined with respect to the axial direction and the radial direction.

In the cross section shown in Fig. 12, two oil passage through holes 131M and 131N are formed at different positions in the axial direction. Oil passage through hole 131N extends in the radial direction. Oil passage through hole 131M is inclined with respect to the axial direction and the radial direction. In the cross section shown in Fig. 13, two oil passage through holes 131P and 131Q are formed at different positions in the axial direction. Oil passage through holes 131P and 131Q are inclined with respect to the axial direction and the radial direction.

### [Lubrication of Parking Brake 110]

Output shaft 80 is rotated by driving force generated by engine 40 when wheel loader 10 travels. The lubricating oil for lubricating parking brake 110 is supplied from an oil pump (not shown) to housing oil passage 68. At the position where supply oil passage 98 is formed, a gap exists between transfer housing 60 and the outer circumferential surface of output shaft 80. The lubricating oil flowing out of housing oil passage 68 is temporarily accumulated in this gap and then flows into both of two supply oil passages 98 in a well-balanced manner. The lubricating oil flows radially inward through supply oil passage 98 and flows out of supply oil passage 98 into axial oil passage 91.

The lubricating oil flows forward through axial oil passage 91. The lubricating oil flows from axial oil passage 91 into first discharge hole 94 and second discharge hole 96. The lubricating oil flows radially outward through first discharge hole 94 and the second discharge hole, and then, reaches the outer circumferential surface of output shaft 80. At the axial position where first discharge hole 94 and second discharge hole 96 open in the outer circumferential surface of output shaft 80, a gap exists between the outer circumferential surface of output shaft 80 and the inner circumferential surface of cylindrical member 130. This gap functions as an oil reservoir 140 (see also Fig. 7). Oil passage through holes 131A to 131Q communicate with first discharge hole 94 or second discharge hole 96 through oil reservoir 140.

The lubricating oil flowing out of first discharge hole 94 and second discharge hole 96 temporarily accumulates in oil reservoir 140, and then, flows into oil passage through holes 131A to 131Q formed in cylindrical member 130 in a well-balanced manner. The lubricating oil flows radially outward through oil passage through holes 131A to 131Q and then flows out of different positions in the axial direction and the circumferential direction. The lubricating oil flowing out of each oil passage through hole is supplied to parking brake 110, more particularly, to a frictional engagement portion in which plates 112 and discs 114 are alternately arranged in the axial direction.

In this way, the lubricating oil for lubricating parking brake 110 is supplied from housing oil passage 68 to parking brake 110 sequentially through supply oil passage 98, axial oil passage 91, first discharge hole 94 and second discharge hole 96, and oil passage through holes 131A to 131Q.

### [Functions and Effects]

The following describes a summary of the characteristic configuration and functions and effects about a work machine according to the above-mentioned embodiment. The constituent elements in the embodiment are denoted by reference characters, each of which is merely an example.

As shown in Fig. 3, parking brake 110 for braking rotation of output shaft 80 is disposed around output shaft 80 that is rotated by driving force. Output shaft 80 is provided with axial oil passage 91, first discharge hole 94, and second discharge hole 96. Axial oil passage 91 extends in the axial direction of output shaft 80. First discharge hole 94 and second discharge hole 96 communicate with axial oil passage 91, and open in the outer circumferential surface of output shaft 80 at an installation position of parking brake 110 in the axial direction.

The lubricating oil for lubricating parking brake 110 can be reliably supplied to parking brake 110 sequentially through axial oil passage 91, and first discharge hole 94 and second discharge hole 96. Accordingly, the lubricating performance of parking brake 110 can be ensured.

The lubricating oil can be supplied through output shaft 80 to parking brake 110 from the inside in the radial direction. Thus, parking brake 110 does not have to be immersed in the lubricating oil. As shown in Fig. 3, parking brake 110 is to be disposed above oil level OL. Since parking brake 110 does not receive the stirring resistance of the lubricating oil during rotation of output shaft 80, the fuel efficiency during traveling can be improved.

In a configuration in which parking brake 110 is disposed above oil level OL, oil level OL can be lowered, with the result that the length of output gear 81 shown in Fig. 3 that is immersed in the lubricating oil is reduced. This can also reduce the stirring resistance of the lubricating oil that acts on rotating output gear 81 during rotation of output shaft 80.

As shown in Fig. 3, parking brake 110 includes a plurality of plates 112 attached to transfer housing 60 and a plurality of discs 114 that rotate together with output shaft 80. Plates 112 and discs 114 are alternately arranged in the axial direction to form a frictional engagement portion. First discharge hole 94 and second discharge hole 96 open in the outer circumferential surface of output shaft 80 at the installation position of the frictional engagement portion in the axial direction. Thereby, the lubricating oil can be reliably supplied to the frictional engagement portion.

As shown in Fig. 5, first discharge hole 94 is radially formed. Second discharge hole 96 is also similarly radially formed. Thereby, the lubricating oil can be supplied to parking brake 110 in a well-balanced manner entirely in the circumferential direction.

As shown in Fig. 3, output shaft 80 is provided with first discharge hole 94 and second discharge hole 96 that are arranged in the axial direction. Thereby, the lubricating oil can be supplied to parking brake 110 in a well-balanced manner in the axial direction.

As shown in Figs. 5 and 6, outer diameter D2 of output shaft 80 at the position where supply oil passage 98 is formed is smaller than outer diameter D1 of output shaft 80 at the position where first discharge hole 94 is formed.

The lubricating oil flows out of output shaft 80 through first discharge hole 94 and second discharge hole 96. As output shaft 80 rotates, centrifugal force acts on the lubricating oil inside the oil passage formed in output shaft 80. Output shaft 80 is formed to have an outer diameter that is relatively large at each of positions where first discharge hole 94 and second discharge hole 96 are formed, thereby facilitating supply of the lubricating oil to parking brake 110. During high-speed traveling particularly requiring lubrication, the rotational speed of output shaft 80 increases to thereby also increase the centrifugal force that acts on the lubricating oil in first discharge hole 94 and second discharge hole 96. Thus, the flow rate of the lubricating oil supplied to parking brake 110 can be increased by the action of centrifugal force.

On the other hand, when supply oil passage 98 through which lubricating oil is supplied to axial oil passage 91 is formed at the position where the outer diameter of output shaft 80 is relatively small, the centrifugal force acting on the lubricating oil in supply oil passage 98 is relatively small accordingly. Even the lubricating oil with a relatively small original pressure is sufficient to be supplied to supply oil passage 98, and thus, the cost of the oil pump can be reduced.

As shown in Fig. 1, work implement 16 of wheel loader 10 is installed forward of front frame 12. Wheel loader 10 performs an excavation work by pushing bucket 24 into a work object and scooping the work object into bucket 24. Thus, a relatively large load is applied onto the front side of the vehicular body. Output shaft 80 is also required to have higher strength on its front side, and therefore, has a relatively large diameter on this front side. As shown in Fig. 3, supply oil passage 98 is disposed rearward of first discharge hole 94 and second discharge hole 96, to thereby reliably allow a configuration in which outer diameter D2 of output shaft 80 at the position where supply oil passage 98 is formed is smaller than outer diameter D1 of output shaft 80 at the position where first discharge hole 94 is formed.

On the other hand, the strength required for output shaft 80 is smaller on the rear side. Supply oil passage 98 is formed on the rear side of output shaft 80, and thereby, the influence of such formation of supply oil passage 98 exerted upon the strength of output shaft 80 can be further reduced.

As shown in Fig. 3, frontward output flange 87 is attached to front end 86 of output shaft 80. Also, rearward output flange 89 is attached to rear end 88 of output shaft 80. As shown in Figs. 2 and 3, output shaft 80 that outputs the driving force to be transmitted to front wheel 27 and rear wheel 28 is installed at the lowest position among the shafts constituting the power transmission device. Output shaft 80 is disposed at the position close to the oil pan. Output shaft 80 disposed in this way is equipped with parking brake 110 for braking the rotation of output shaft 80, and parking brake 110 is disposed above oil level OL. Thereby, the fuel efficiency during traveling can be effectively improved.

As shown in Fig. 3, cylindrical member 130 is attached to the outer circumferential surface of output shaft 80, in which first discharge hole 94 and second discharge hole 96 open in the outer circumferential surface. Parking brake 110 is disposed around cylindrical member 130. As shown in Figs. 7 to 13, cylindrical member 130 is provided with a plurality of oil passage through holes 131A to 131Q at different positions in the axial direction and the circumferential direction. Thereby, the lubricating oil can be supplied to parking brake 110 in a well-balanced manner in the axial direction and the circumferential direction.

The embodiment has been described above with regard to the example in which axial oil passage 91 is formed at the center of output shaft 80. Axial oil passage 91 does not necessarily have to be formed at the center of output shaft 80. Alternatively, a plurality of axial oil passages may be formed at positions away from the center of output shaft 80 in consideration of balance. First discharge hole 94 and second discharge hole 96 do not necessarily have to extend in the radial direction, but discharge holes may be formed to incline with respect to the radial direction or incline with respect to both the axial direction and the radial direction.

Supply oil passage 98 also does not necessarily have to extend in the radial direction, but may be inclined with respect to the radial direction or may be inclined with respect to both the axial direction and the radial direction. Supply oil passage 98 only has to include a portion extending radially from axial oil passage 91, but does not necessarily have to open in the outer circumferential surface of output shaft 80.

The above embodiment has been described with reference to an example of output shaft 80 through which driving force is transmitted to both front wheel 27 and rear wheel 28 of wheel loader 10. The concept of the parking brake and the oil passage according to the embodiment may be applicable to the shaft through which driving force is transmitted to one of the front wheel and the rear wheel. The concept of the embodiment may be applicable to shafts other than the output shaft of the transmission.

It should be understood that the embodiments disclosed herein are illustrative and non-restrictive in every respect. The scope of the present invention is defined by the terms of the claims, rather than the description above, and is intended to include any modifications within the meaning and scope equivalent to the terms of the claims.

### REFERENCE SIGNS LIST

10 wheel loader, 12 front frame, 14 rear frame, 16 work implement, 17 engine food, 27 front wheel, 28 rear wheel, 30 cab, 33 operator's seat, 40 engine, 41 torque converter, 42 upper propeller shaft, 43 transmission, 44 transfer case, 45 center propeller shaft, 46 center support, 47 front propeller shaft, 48 front axle, 49 rear propeller shaft, 50 rear axle, 60 transfer housing, 61 first housing member, 62 second housing member, 63 third housing member, 64 fourth housing member, 65 fifth housing member, 66 sixth housing member, 68 housing oil passage, 80 output shaft, 81 output gear, 84, 85 bearing, 86 front end, 87 frontward output flange, 88 rear end, 89 rearward output flange, 91 axial oil passage, 94 first discharge hole, 96 second discharge hole, 98 supply oil passage, 110 parking brake, 112 plate, 114 disc, 118 extending portion, 120 piston member, 122 first spring portion, 124 second spring portion, 126 oil chamber, 128 piston driving oil passage, 130 cylindrical member, 131A to 131Q oil passage through hole, 140 oil reservoir, CL center line, D1, D2 outer diameter, OL oil level.

## Claims

1. A work machine comprising:
a machine body;
a driving wheel attached to the machine body;
a driving source device that generates driving force for driving the driving wheel; and
a power transmission device that transmits the driving force from the driving source device to the driving wheel, wherein
the power transmission device includes a shaft that is rotated by the driving force,
the work machine further comprises a parking brake disposed around the shaft to brake rotation of the shaft, and
the shaft is provided with
an axial oil passage extending in an axial direction of the shaft, and
a discharge hole communicating with the axial oil passage and opening in an outer circumferential surface of the shaft at an installation position of the parking brake in the axial direction.

2. The work machine according to claim 1, further comprising a housing accommodating the shaft, wherein
the parking brake includes
a plurality of plates attached to the housing, and
a plurality of discs rotatable together with the shaft,
the plates and the discs are alternately arranged in the axial direction to form a frictional engagement portion, and
the discharge hole opens in the outer circumferential surface at an installation position of the frictional engagement portion in the axial direction.

3. The work machine according to claim 1 or 2, wherein the discharge hole is radially formed.

4. The work machine according to any one of claims 1 to 3, wherein the shaft is provided with a plurality of the discharge holes in the axial direction.

5. The work machine according to any one of claims 1 to 4, wherein
the shaft is further provided with a supply oil passage communicating with the axial oil passage, and the supply oil passage includes a portion extending from the axial oil passage in a radial direction of the shaft, and
an outer diameter of the shaft is smaller at a position where the supply oil passage is formed than at a position where the discharge hole is formed.

6. The work machine according to claim 5, further comprising a work implement installed forward of the machine body, wherein
the supply oil passage is disposed rearward of the discharge hole.

7. The work machine according to any one of claims 1 to 6, wherein
the driving wheel includes a front wheel and a rear wheel,
the work machine further comprises:
a frontward output member that is attached to a front end of the shaft and outputs the driving force to be transmitted to the front wheel; and
a rearward output member that is attached to a rear end of the shaft and outputs the driving force to be transmitted to the rear wheel.

8. The work machine according to any one of claims 1 to 7, further comprising a cylindrical member attached to the outer circumferential surface of the shaft in which the discharge hole opens in the outer circumferential surface, the cylindrical member being provided to be rotatable integrally with the shaft, wherein
the parking brake is disposed around the cylindrical member, and
the cylindrical member is provided with a plurality of oil passage through holes at different positions in the axial direction and a circumferential direction, and the oil passage through holes communicate with the discharge hole and pass through the cylindrical member in a radial direction.
